# FASCICULE DE BREVET EUROPEEN

(11) **EP 0 382 593 B1**
(45) Date de publication et mention de la délivrance du brevet: **23.06.1993**
(21) Numéro de dépôt: 90400192.2
(22) Date de dépôt: 23.01.1990
(51) Int. Cl.: F16L 47/02, B29C 65/34

(54) **Système d'assemblage par soudure d'éléments tubulaires emboitables**
Verbindungssystem zum Verschweissen von ineinandersteckbaren rohrförmigen Teilen
System for joining insertable tubular elements together by welding

(30) Priorité: 30.01.1989 US 304327
(43) Date de publication de la demande: 16.08.1990
(73) Titulaire: ETEX, F-75008 Paris (FR)
(72) Inventeur: Sixsmith, Thomas G., California (US)
(74) Mandataire: Armengaud Ainé, Alain

(56) Documents cités:
- EP-A- 0 093 821
- EP-A- 0 253 966
- US-A- 3 506 519

## Description

Cette invention se rapporte en général au raccord d'éléments s'interajustant, et elle se réfère plus particulièrement à la jonction étanche d'éléments tubulaires emboîtables tels que des tuyaux et des raccords tubulaires qui sont composés de matériau thermoplastique et assemblés par soudure électrique ou par procédé du fusion.

Un exemple de l'état antérieur d'une telle technique est décrit dans le brevet US-A n° 3 506 519, dans lequel une bague de soudure en résine thermoplastique, ayant une bobine de fil de résistance électrique enrobée dans la résine, est serrée dans une jonction de tuyau entre un élément de raccord à l'extérieur du joint et un élément intérieur en forme de tuyau qui est ajusté dans l'élément raccord. Les extrémités du fil formant la résistance chauffante s'étendent hors de la jonction afin d'être connectés avec une source d'énergie, par exemple, comme dans le brevet US-A n° 3 465 126. Durant le procédé de fusion, la jonction est maintenue par un serre-joint qui est appliqué autour des éléments emboités et qui presse les éléments entre-deux durant la fusion.

Comme expliqué dans le brevet US-A n° 3 506 519, ce procédé de soudure électrique fond des éléments du joint tandis qu'ils sont maintenus en contact étroit, évite l'expansion thermique des produits et compense certaines tolérances dimensionnelles. D'une manière plus importante, ce procédé lie ensemble les pièces dans une structure homogène qui fournit un joint étanche et sûr.

La présente invention réside dans un assemblage par soudure d'éléments tubulaires emboîtables qui conserve tous les avantages de la précédente bague de soudure du brevet US-A n° 3 506 519 et, de plus, facilite grandement la manipulation des parties durant l'assemblage de la jonction à souder afin d'accroître l'efficacité de l'opération et de permettre des économies substantielles de temps et de travail.

Cette invention a donc pour objet un système d'assemblage par soudure d'éléments tubulaires emboîtables en matériau thermoplastique tels que notamment un tuyau et un raccord tubulaire, comportant un manchon de soudage devant être inséré entre le tuyau et le raccord tubulaire ledit manchon étant muni d'une résistance chauffante pour en réaliser la fusion, comprenant :
- un collier de montage pour maintenir ledit manchon en place entre lesdits éléments tubulaires et qui est fixé à une extrémité dudit manchon, ledit collier de montage étant un moulage plastique d'une seule pièce avec un corps en forme de couronne dont le diamètre intérieur correspond sensiblement au diamètre intérieur dudit manchon et,
- des moyens de montage recouvrant ledit manchon en relation radialement espacée avec lui afin d'agir avec le manchon pour définir une assise destinée à recevoir l'extrémité dudit raccord tubulaire, lesdits moyens de montage comprenant une bride compressible à paroi mince faisant partie dudit collier disposée en relation espacée coaxiale avec ledit manchon de soudage, ce dernier étant disposé radialement vers l'intérieur à partir de ladite bride et présentant un diamètre intérieur dimensionné de façon à accueillir par emboîtement coulissant ledit tuyau.

Comme on le comprend, selon cette invention, le manchon de soudage est combiné avec un collier de montage en un élément unique formant couronne qui est ajusté sur l'emboiture du raccord tout en maintenant le manchon de soudage dans sa propre position à l'intérieur dudit raccord, et les fils constituant les extrémités de la résistance chauffante sont connectés à un contacteur électrique à connexion/déconnexion rapide disposé sur le collier, pour une connexion plus commode à une source d'énergie. De plus, le collier a une bride compressible qui couvre le manchon de soudage en rapport coaxial avec lui, coopérant avec le manchon pour former une assise annulaire destinée à recevoir l'extrémité de l'emboiture du raccord, et un anneau de serrage s'étendant autour de cette bride et incluant des moyens de réglage de son diamètre afin de presser ensemble les éléments de la jonction pendant la soudure. Cet anneau est pré-installé sur la bride et est maintenu captif sur elle entre des cliquets opposés éliminant la nécessité d'une mise en oeuvre séparée. Chaque collier a de préférence, son propre anneau qui reste en place sur la jonction en la maintenant étroitement serrée durant le refroidissement.

D'autres aspects de l'invention incluent : la conception du raccord électrique à l'intérieur d'une patte radiale disposée sur un côté du collier et qui peut être positionnée à volonté sur n'importe quel côté du joint pour comodité d'accès; la conception de la bride comme une jupe à paroi étroite qui est interrompue à intervalles pour faciliter la flexibilité; l'utilisation d'un serre-joint présentant des moyens de rétrécissement de l'anneau de serrage sous la forme de parois opposées, généralement radiales c'est-à-dire décalées vers l'extérieur de l'anneau et qui peuvent être facilement attrapées et pressées dans des pinces de sorte à contracter l'anneau autour du joint; et la fixation du manchon de soudage à une extrémité d'un élément formant collier-manchon suite au moulage du collier.

D'autres aspects et avantages de l'invention ressortiront de la description détaillée faite ci-après en référence aux dessins annexés sur lesquels :
la figure 1 est une vue en perspective partiellement explosée d'un raccord de tuyau à 3 branches et des sections partielles de trois tuyaux devant être connectés par emboitement, à l'aide de trois assemblages de manchons de soudage conformes à la présente invention, deux des assemblages étant installés sur les emboitures femelles, et le troisième étant présenté dans une perspective explosée avec un connecteur électrique relié à une source d'énergie électrique;
la figure 2 est une vue d'extrémité en élévation d'un élément formant collier-manchon de la figure 1, montré à une échelle agrandie, la vue étant prise dans la direction de la flèche 2 de la figure 1, et étant partiellement ouverte et montrée en coupe, cette extrémité étant référencée dans la description comme la face avant;
la figure 3 est une vue d'extrémité en élévation de l'élément formant collier-manchon de la figure 2 et prise à partir de l'extrémité opposée, référencée dans la description comme la face arrière; et
la figure 4 est une vue élargie fractionnaire en coupe prise essentiellement le long de la ligne 4-4 de la figure 1, les différentes parties de l'assemblage étant montrées à la même échelle que les figures 2 et 3.

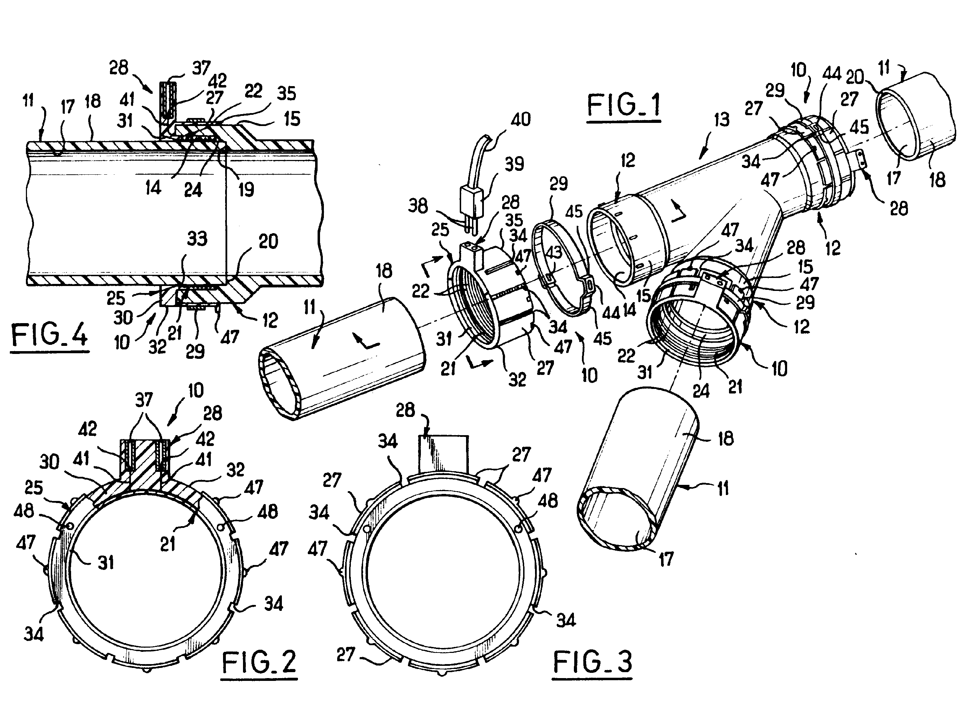

Comme on le voit sur le dessin et à titre d'exemple non limitatif, l'invention concerne un système d'assemblage par soudure (indiqué généralement repère 10 dans les figures 1 et 4) d'éléments tubulaires emboîtables, tels qu'un élément tuyau 11 dans un élément raccord de tuyau 12, en un joint du type à recouvrement et dans lequel les deux éléments tubulaires se chevauchent. Dans le mode de réalisation montré sur les figures 1 et 4, trois tuyaux 11 sont reçus dans trois emboitures 12 d'un raccord tubulaire en forme de Y 13, deux des tuyaux étant assemblés suivant le même axe d'alignement et le troisième étant assemblé à angle aigu.

Le raccord tubulaire 13 est de configuration conventionnelle, ayant une section rectiligne avec deux emboitures femelles à ses extrémités opposées et une section de branchement avec une autre emboiture femelle à son extrémité externe. Chaque emboiture est définie par une tulipe d'extrémité dont les parois intérieures et extérieures 14 et 15, (voir figure 4) sont de plus grand diamètre que celui des parois intérieures et extérieures 17 et 18 des tuyaux. Chaque emboiture présente également un épaulement interne 19 situé entre les plus grands et les plus petits diamètres intérieurs de l'emboitement, cet épaulement constituant le fond du raccord contre lequel le bord extrême 20 d'un tuyau 11 vient buter lorsque ce dernier est pleinement inséré dans l'emboiture. Il convient de noter que la même structure de base peut être utilisée lorsque deux sections de tuyaux sont assemblées ensemble bout-à-bout, une extrémité d'un tel tuyau (non montré) étant alors tulipée pour former un raccord femelle.

Des tuyaux et des raccords tubulaires de ce type sont utilisés pour une large variété d'utilisations, allant des systèmes ordinaires d'évacuation des eaux usées domestiques aux systèmes de rejet des produits corrosifs. La plupart du temps, les tuyaux et raccords tubulaires sont composés d'un polymère thermoplastique tel qu'un polypropylène ignifugé qui est robuste, durable, et hautement résistant aux effluents corrosifs.

Comme expliqué dans le brevet US-A n° 3 506 519, il est connu de souder les assemblages en plaçant un manchon de soudage en résine thermoplastique entre les tuyaux et les raccords tubulaires et en fondant ledit manchon ainsi que les parties avoisinantes du tuyau et des raccords tubulaires en faisant passer un courant électrique à travers une résistance chauffante qui est enrobée ou logée dans le manchon. De plus, il est courant d'appliquer une pression externe aux éléments à assembler pour assurer leur contact étroit pendant l'échauffement du matériau thermoplastique et le refroidissement qui suit.

Selon la pratique antérieure, un manchon de soudage 21 est ici disposé dans chaque raccord, entre la surface intérieure 14 du raccord tubulaire et la surface extérieure 18 du tuyau. Le manchon de soudage comprend un corps tubulaire réalisé à partir d'un matériau thermoplastique convenable pour l'assemblage particulier du tuyau, typiquement du polypropylène, avec une résistance chauffante 22 composé d'un fil électrique enrobé dans le manchon et capable de produire une chaleur suffisante, lorsqu'elle reçoit de l'énergie électrique, pour fondre ensemble les éléments de l'assemblage. Comme montré en figure 4, le raccord tubulaire 12 présente une paroi extérieure qui est d'un diamètre légèrement supérieur et se terminant par un petit épaulement interne 24 qui est placé vers l'avant ou vers l'extérieur (à gauche dans la figure 4) de l'épaulement 19. Le diamètre de la paroi située en face de cet épaulement dépasse le diamètre extérieur du tuyau d'une distance suffisante pour recevoir avec un léger jeu le manchon de soudage dans l'emboiture entourant le tuyau. Le petit épaulement 24 est espacé du bord extérieur de l'emboiture, d'au moins la longueur de la bague de soudure 21. Ainsi, l'épaulement retient le bord intérieur du manchon de soudage et facilite le placement dudit manchon dans l'emboiture, préalablement à l'opération de fusion.

Selon la méthode décrite dans le brevet US-A n° 3 506 519, il est nécessaire de placer le manchon de soudage sur le tuyau ou dans l'emboiture avant d'engager les deux parties ensemble, en prenant soin toutefois de maintenir les fils électriques issus de la résistance chauffante dans une position convenable pour permettre la connection à une source d'énergie (non montrée). Il est aussi nécessaire de prévoir un dispositif de blocage (non montré ici) décrit dans le brevet, au dessus de l'assemblage, et de le verrouiller jusqu'à ce que le tuyau soit maintenu dans l'emboiture, en prenant soin à nouveau de maintenir les guides électriques en place pour la connexion avec la source d'énergie. Lorsque tous ces éléments variés sont installés, serrés et connectés, la source d'énergie est branchée pour procéder à la fusion, après quoi l'assemblage est refroidi et le blocage est retiré.

Selon la présente invention, le manchon de soudage 21 est incorporé dans un système d'assemblage par soudure 10 qui inclut un collier de montage 25 pour placer et maintenir le manchon convenablement dans l'emboiture 12 prête à recevoir l'extrémité d'un tuyau 11, et inclut une bride compressible 27 pour le serrage des parties emboitées pendant le procédé de soudure. Un connecteur électrique 28, disposé sur le collier peut être orienté suivant la direction choisie autour de l'assemblage afin de faciliter l'accès et est relié aux fils de la résistance 22 afin de les protéger et de faciliter les opérations de connexion et de déconnexion. De plus, un serre-joint simple et peu coûteux 29 est incorporé dans l'assemblage, préférentiellement sous la forme d'un élément captif qui est installé sur l'emboitement et qui fait partie intégrante de l'assemblage 10, ledit serre-joint restant en place même après l'achèvement de la fusion.

Comme illustré dans un mode de réalisation préférentiel de l'invention, le collier de montage 25 de l'assemblage 10 présente un corps en forme de couronne 30 (voir figure 4) qui s'étend contre l'extrémité du raccord tubulaire 12 avec une paroi intérieure 31 formant une ouverture pour l'admission du tuyau 11 dans ledit raccord. Cette ouverture est, de préférence, en forme de cône pour faciliter l'insertion du tuyau. La paroi extérieure 32 du corps de la couronne est légèrement plus grande que la paroi extérieure 15 du raccord tubulaire, et la bride compressible 27 sur le collier s'étend vers l'arrière (à droite dans la figure 4) à partir du corps 30 et le long du raccord tubulaire de manière à recouvrir les parties emboitées du tuyau et du raccord tubulaire.

Plus spécifiquement, le collier de montage préféré 25 ici est un moulage plastique en une pièce à laquelle le manchon de soudage 21 est liée pendant le procédé de moulage. Comme on peut le voir en figure 4, le manchon de soudage bute à son extrémité de face (l'extrémité gauche dans la figure 4) contre un épaulement interne 33 sur le corps 30, et se trouve sensiblement au même niveau que le bord interne de l'ouverture latérale 31 ménagée dans le corps, au bord interne du biseau. La bride compressible 27 s'étend vers la droite à partir de la surface extérieure du collier, essentiellement au même niveau que cette surface et coaxialement avec la bague de soudure 21. La bride fait partie intégrante du corps et présente des parois minces flexibles radialement et interrompues à intervalle régulier sur tout le périmètre de la bride par des encoches 34 (voir figure 1) qui sont de préférence espacées à intervalles égaux et s'étendent transversalement jusqu'au bord arrière libre 35. Ainsi, la bride est divisée en une pluralité de doigts flexibles recouvrant la bague de soudure.

Le connecteur électrique est constitué d'une patte radiale 28 issue du collier 25 possédant deux trous parallèles 37 qui ouvrent vers l'extérieur à travers l'extrémité de la patte. Les broches parallèles 38 d'une prise mâle 39, reliée à deux fils électriques 40 permettent le branchement à la source d'énergie. Les trous sont garnis avec un matériau conducteur d'électricité tel que des contacts de cuivre tubulaires, et sont reliés électriquement aux guides 41 de la résistance. Comme montré dans les figures 2 et 4, ces guides s'étendent ici à partir du manchon 21 à l'intérieur et à travers le corps 30 du collier vers les contacts, et sont soudés à leur jonction en 42.

Un ensemble collier-manchon de ce type peut être produit par un procédé de moulage en deux étapes consistant à mouler d'abord la résistance 22 dans le manchon de soudage avec les deux guides 41 sortant d'une extrémité de la bague, et à former ensuite le collier 25 selon un procédé de moulage par injection avec le manchon de soudage et la résistance disposés dans le moule comme des inserts. De cette manière, le collier, incluant la patte 28 et la bride 27, peut être moulé par injection en une seule pièce autour des inserts. Dans ce procédé l'extrémité de la résistance qui aboutit contre l'épaulement 33 du corps du collier est liée et soudée par chaleur au collier, avec les fils de la résistance s'étendant au travers du corps jusqu'aux contacts électriques situés dans les trous 37.

Le serre-joint 29 permettant la jonction étanche de l'assemblage 10 est un bracelet de métal qui encercle de manière ample la bride compressible 27 et qui dispose de moyens pour resserrer le bracelet autour de la bride et ainsi de presser les éléments de l'assemblage. La serre-joint illustré présente des extrémités emboitées qui sont fixées ensemble en 43, sous forme d'un cercle permanent, et les moyens pour resserrer le bracelet, moyens comprenant un débord 44 vers l'extérieur d'une petite section de la bande, limitée par deux parois opposées généralement radiales, ou languettes 45 qui peuvent être serrées ensemble avec des pinces "pincher" conventionnelles (non montrées). Un serre-joint de ce type est vendu par Oetiker, Marquette, Michigan.

Pour faciliter l'installation du serre-joint 29 sur une jonction de tuyaux, la bride 27 du collier 25 est munie de cliquets 47 le long du bord arrière libre 35 qui aide à maintenir le serre-joint captif contre la bride. Ces cliquets sont constitués d'une série de petites pattes intégrées ou bossages qui sont moulés sur la bride contre la face arrière, lesdites pattes étant plus saillantes vers l'extérieur que le diamètre intérieur du serre-joint. La patte 28 forme un aboutement opposé empêchant le serre-joint de glisser du côté avant du collier.

Un tel serre-joint est facilement installé sur un ensemble collier-manchon, soit pendant le processus de fabrication, soit lors de la mise en oeuvre de l'assemblage sur le chantier, simplement en comprimant la bride 27 afin de recevoir un serre-joint. Lorsque l'effort est relâché, la bride reprend sa taille normale du fait de l'élasticité intrinsèque du polypropylène, et le serre-joint est alors maintenu en position d'agir sur la bride. De cette façon, le serre-joint encercle largement la bride, et peut être tourné afin de placer la section rétrécissante 44 dans n'importe quelle position angulaire souhaitée.

Quand deux tuyaux ou plus doivent être assemblés et soudés ensemble avec un tel système d'assemblage, selon la présente invention, il convient d'utiliser pour chaque paire de tuyaux et de raccords tubulaires 11 et 12 un ensemble collier-manchon.

Il est bien entendu que l'assemblage peut être réalisé, comme dans le présent exemple sur l'emboiture d'un raccord tubulaire 13, mais également sans faire novation sur le simple tulipage d'un tuyau.

Pour l'assemblage et le soudage d'éléments tubulaires de diamètre compatible, on procède comme suit :
ajustage de l'ensemble collier-manchon sur l'extrémité du raccord tubulaire, le serre-joint 29 étant en place sur la bride du collier 27, introduction du manchon 21 dans le raccord tubulaire le long de la paroi interne 14 de celui-ci avec coulissement de la bride 27 sur l'élément raccord le long de sa paroi extérieure 15. Les composants du système d'assemblage par soudure étanche sont calibrés pour pouvoir coulisser dans les emboitements dans la limite des tolérances acceptables pour les différents éléments tubulaires.

L'extrémité intérieure, ou face arrière, du manchon de soudage 21 vient prendre appui contre l'épaulement 24 dans la phase finale de l'introduction du corps 30 du collier sur l'emboiture, ladite emboiture étant alors totalement disposée dans l'espace annulaire qui est défini entre le collier et le manchon de soudage. Le tuyau est enfin inséré dans l'emboiture, à travers l'ouverture en biais 31 formée par le corps du collier, et glisse le long du manchon de soudage jusqu'à ce que l'extrémité du tuyau vienne s'emboiter contre l'épaulement 19 disposé au fond du raccord. Le raccord est alors prêt à être soudé et scellé à l'aide d'un courant électrique.

Ce dernier est fourni en branchant le connecteur à broches 39 dans les trous 37 du connecteur électrique formé dans la patte 28. La patte, bien sûr, peut être tournée facilement dans la position qui est la plus convenable pour recevoir le connecteur. L'approvisionnement en énergie de la résistance peut être contrôlé selon l'art antérieur, en utilisant une source d'énergie (non montrée) du type décrit dans le brevet US-A n° 3 465 126.

Conformément à l'invention, l'application d'une pression de blocage se fait d'une manière très simple. Les parois 45 du débord 44 issu du serre-joint 29 sont pincées et serrées au moment opportun afin de compresser la bride compressible 27 autour de l'emboiture. Si souhaité, ce serrage peut être fait auparavant, lorsque le tuyau et le raccord tubulaire sont assemblés, et de nouveau lors du chauffage pour assurer l'application d'une pleine pression au raccord. Lorsque le cycle de chauffage est achevé, le connecteur électrique 39 est simplement débranché de la patte 28.

Afin de fournir une indication visuelle sur la bonne connexion électrique et sur la fusion correcte du plastique un, ou plusieurs, petit passage 48 peuvent être formé dans le collier de montage 25 et s'étendent dans l'espace où la bague est maintenue, de sorte à constituer des trous "pleureurs" pour l'échappement d'infimes quantités de plastique fondu sous la pression de blocage. Cela fournit une indication positive qu'une bonne connection électrique a été faite et que le plastique a, en fait, fondu.

Il ressort de ce qui précède que l'installation du manchon de soudage 21, le maniement des fils électriques 41 de la résistance chauffante 21 et l'installation du serre-joint avec action du blocage 29 sont simplifiées d'une manière significative comparée aux étapes correspondantes décrites dans le brevet US-A n° 3 506 519. Il s'en suit une grande facilité de mise en oeuvre du système d'assemblage par soudure, une grande fiabilité car l'opération est virtuellement indéréglable et un gain de temps appréciable sur le chantier.

## Revendications

1. Système d'assemblage par soudure d'éléments tubulaires emboîtables en matériau thermo-plastique, tels que notamment un tuyau et un raccord tubulaire, comportant un manchon de soudage (21) présentant un diamètre intérieur dimensionné de façon à accueillir par emboîtement coulissant le tuyau et devant être inséré entre le tuyau et le raccord tubulaire (11, 12), ledit manchon étant muni d'une résistance chauffante encastrée (22) pour en réaliser la fusion, caractérisé en ce qu'il comprend :
- un collier de montage (25) pour maintenir ledit manchon en place entre lesdits éléments tubulaires et qui est fixé à une extrémité dudit manchon, ledit collier de montage (25) étant un moulage plastique d'une seule pièce avec un corps en forme de couronne (30) dont le diamètre intérieur correspond sensiblement au diamètre intérieur dudit manchon et,
- des moyens de montage (47) recouvrant ledit manchon en relation radialement espacée avec lui afin d'agir avec le manchon pour définir une assise destinée à recevoir l'extrémité dudit raccord tubulaire, lesdits moyens de montage comprenant une bride compressible à paroi mince (27) faisant partie dudit collier (25) disposée en relation espacée coaxiale avec ledit manchon de soudage (21), ce dernier étant disposé radialement vers l'intérieur à partir de ladite bride (27).

2. Système d'assemblage selon la revendication 1, caractérisé en ce que ladite bride (27) comprend une pluralité de doigts flexibles (47) s'étendant à partir dudit collier pour recouvrir ledit manchon.

3. Système d'assemblage selon l'une des revendications précédentes, caractérisé en ce que ledit collier (25) est muni d'une patte (28) sur son côté extérieur formant connecteur électrique, et en ce que ladite résistance (22) comporte des fils électriques (41) qui s'étendent à travers le corps du collier vers ledit connecteur électrique.

4. Système d'assemblage selon la revendication 3, caractérisé en ce que ledit connecteur (28) comprend une patte s'étendant radialement vers l'extérieur du corps du collier.

5. Système d'assemblage selon l'une des revendications précédentes, caractérisé en ce qu'il comporte en outre un moyen de serrage ou de blocage annulaire (29) s'étendant autour de ladite bride (27) et comportant des moyens pour appliquer cette bride autour desdits éléments tubulaires pour serrer l'extrémité d'un tuyau et du raccord tubulaire contre ledit manchon de soudage.

6. Système d'assemblage selon l'une des revendications précédentes, caractérisé en ce qu'il comporte en outre des cliquets (47) pour maintenir captifs lesdits moyens de serrage en situation relâchée sur le collier de montage (25).

7. Système d'assemblage selon l'une des revendications précédentes, caractérisé en ce que lesdits cliquets (47) sont constitués d'une série de pattes ou de bossages qui s'étendent vers l'extérieur dudit collier sur la face arrière de ladite bride (27).

8. Système d'assemblage selon l'une des revendications précédentes, caractérisé en ce que lesdits moyens de serrage ou de blocage annulaire (29) sont réalisés sous la forme d'un serre-joint encerclant lesdits moyens de montage (47) et comportant des moyens assurant sa contraction lorsqu'ils sont serrés par des pinces.

9. Système d'assemblage selon l'une des revendications précédentes, caractérisé en ce que ladite bride ( 27 ) est une jupe en matériau compressible élastique, et est fendue par intervalles autour dudit collier (25) afin de renforcer le serrage.

10. Système d'assemblage selon l'une des revendications précédentes, caractérisé en ce que les moyens de serrage (29) sont réalisés sous la forme d'un bracelet de métal ayant un diamètre intérieur s'ajustant amplement autour de ladite bride (27) en situation relâchée, et en ce que lesdits moyens appliquant la bride autour desdits éléments tubulaires sont constitués par un débord (44) vers l'extérieur d'une petite section du bracelet, limitée par deux parois (45) opposées généralement radiales qui peuvent être pressées ensemble pour contracter le bracelet installé.

11. Système d'assemblage selon l'une quelconque des revendications précédentes, caractérisé en ce que ledit corps en forme de couronne (30) possède une ouverture conique (31) pour l'introduction du tuyau dans l'assemblage à souder et un épaulement interne (33) auquel est raccordée une extrémité dudit raccord de soudage.

12. Système d'assemblage selon l'une quelconque des revendications précédentes, caractérisé en ce que la patte dudit connecteur électrique (28) s'étend radialement vers l'extérieur à partir dudit corps en forme de couronne (30), sur un côté dudit collier (25), en ce que ledit connecteur comporte des contacts tubulaires électriques pour le relier à une source d'énergie, et en ce que lesdits fils électriques de la résistance chauffante (22) sont reliés auxdits contacts tubulaires.

13. Système d'assemblage selon l'une quelconque des revendications précédentes, caractérisé en ce que la liaison entre le connecteur électrique (28) et la source d'énergie est assurée par les broches parallèles (38) d'une prise mâle (39) reliée à deux fils électriques (40).

## Patentansprüche

1. System zum Verbinden von rohrförmigen, zusammensteckbaren Elementen aus Thermoplasten, wie insbesondere einem Rohr und einem rohrförmigen Verbindungsteil, durch Schweißen, mit einer Schweißmuffe (21) mit einem Innendurchmesser, der derart bemessen ist, daß er das Rohr in Gleitverbindung aufnimmt, wobei die Schweißmuffe zwischen das Rohr und die rohrförmige Verbindung (11,12) eingeführt werden muß, und wobei die Muffe mit einem integrierten Heizwiderstand (22) zur Duchführung der Bindung versehen ist, **gekennzeichnet durch:**
- einen Montageflansch (25) zum Fixieren der Muffe zwischen den rohrförmigen Elementen, welcher an einem Ende der Muffe befestigt ist, wobei der Montageflansch (25) ein einstückiges Kunststofformteil mit einem flanschförmigen Körper (30) ist, dessen Innendurchmesser in etwa dem Innendurchmesser der Muffe entspricht und
- eine Montageeinrichtung (47), die die Muffe mit radialem Abstand zu derselben überdeckt, um zusammen mit der Muffe ein zur Aufnahme des äußeren Endes des rohrförmigen Verbindungsteils bestimmtes Aufnahmeelement zu bilden, wobei die Montageeinrichtung einen dünnwandigen zusammenpressbaren Ring (27) aufweist, der Teil des Flansches (25) ist, welcher koaxial beabstandet zur Schweißmuffe (21) angeordnet ist, wobei letztere vom Ring (27) weg radial nach innen angeordnet ist.

2. System nach Anspruch 1, **dadurch gekennzeichnet, daß** der Ring (27) eine Anzahl von biegsamen Fingern (47) aufweist, die sich von dem Flansch weg erstrecken, um die Muffe zu überdecken.

3. System nach einem der vorhergehenden Ansprüche, **dadurch gekennzeichnet, daß** der Flansch (25) auf seiner Außenfläche mit einem ein elektrisches Verbindungsstück bildenden Befestigungsstück (28) versehen ist, und daß der Widerstand (22) elektrische Drähte (41) aufweist, die sich quer über den Körper des Flanschelementes zu dem elektrischen Verbindungsstück hin erstrecken.

4. System nach Anspruch 3, **dadurch gekennzeichnet, daß** das Verbindungsstück (28) ein Befestigungsstück aufweist, das sich radial zur Außenseite des Flanschkörpers erstreckt.

5. System nach einem der vorhergehenden Ansprüche, **dadurch gekennzeichnet, daß** es außerdem eine ringförmige Einspann- oder Klemmvorrichtung (29) aufweist, die sich um den Ring (27) herum erstreckt und eine Einrichtung aufweist, um den Ring um die rohrförmigen Teile herum anzusetzen, um das Ende eines Rohres und des rohrförmigen Verbindungsteils gegen die Schweißmuffe festzuklemmen.

6. System nach einem der vorhergehenden Ansprüche, **dadurch gekennzeichnet, daß** außerdem Sperrasten (47) vorgesehen sind, um die Spannvorrichtungen in entspannter Stellung auf dem Montageflansch (25) in Position zu halten.

7. System nach einem der vorhergehenden Ansprüche, **dadurch gekennzeichnet, daß** die Sperrasten (47) aus einer Reihe von Klauen oder Vorsprüngen bestehen, die sich auf der hinteren Seite des Rings (27) zu der außenseite des Flansches hin erstrecken.

8. System nach einem der vorhergehenden Ansprüche, **dadurch gekennzeichnet, daß** die ringförmige Einspann- und Klemmvorrichtung (29) in Form einer Klemmvorrichtung, die die Montagevorrichtung (47) umfaßt und deren Zusammenziehen beim Zusammendrücken mit Klemmen gewährleistende Vorrichtungen aufweist, ausgeführt ist.

9. System nach einem der vorhergehenden Ansprüche, **dadurch gekennzeichnet, daß** der Ring (27) ein Band aus elastischem, zusammenpreßbarem Material und in Anständen um den Flansch (25) herum geschlitzt ist, um die Klemmwirkung zu verstärken.

10. System nach einem der vorhergehenden Ansprüche, **dadurch gekennzeichnet, daß** die Einspannvorrichtung (29) in Form eines Metallreifes mit einem Innendurchmesser ausgeführt ist, der sich im gelockerten Zustand um den Ring (27) herum ausjustiert und dadurch, daß die Vorrichtungen, die den Ring um die rohrförmigen Teile herum anbringen, aus einem Saum (44) zu dem äußeren Bereich eine kleinen Abschnittes des Reifs hin gebildet sind, der durch zwei im wesentlichen gegenüberliegende radiale Wände (45) begrenzt wird, die zusammengepreßt werden können, um den aufgebrachten Reif zusammenzuziehen.

11. System nach einem der vorhergehenden Ansprüche, **dadurch gekennzeichnet, daß** der flanschförmige Körper (30) eine konische Öffnung (31) zum Einführen des Rohrs in die Anordnung zum Schweißen und einen Innenansatz (33), mit dem ein äußeres Ende des Schweißverbindungsteils verbunden ist, aufweist.

12. System nach einem der vorhergehenden Ansprüche, **dadurch gekennzeichnet, daß** sich das Befestigungsstück des elektrischen Verbindungsstücks (28) vom flanschförmigen Körper (30) auf einer Seite des Flansches (25) radial nach außen erstreckt, **dadurch, daß** das Verbindungsstück rohrförmige elektrische Kontakte zum Anschluß an eine Energiequelle aufweist, und **dadurch, daß** die elektrischen Drähte des Heizwiderstandes (22) mit den rohrförmigen Kontakten verbunden sind.

13. System nach einem der vorhergehenden Ansprüche, **dadurch gekennzeichnet, daß** die Verbindung zwischen dem elektrischen Verbindungsstück (28) und der Energiequelle durch parallele dornartige Stifte (38) einem mit zwei elektrischen Drähten (40) verbundenen Steckers (39) gewährleistet ist.

## Claims

1. System for assembly by welding of thermoplastic material nestable tubular elements, such as in particular a pipe and a tubular coupling, comprising a welding sleeve (21) having an internal diameter dimensioned in such a way as to receive by sliding engagement the pipe, before being inserted between the pipe and the tubular element (11,12) said sleeve being provided with an embedded heating resistor (22) for carrying out melting, characterized in that it comprises a fixing clamp (25) for maintaining said sleeve in place between said tubular elements and which is fixed to one end of said sleeve, the fixing clamp (25) being a plastic moulding in one piece with a ring-shaped body (30), whose internal diameter substantially corresponds to the internal diameter of said sleeve and fixing means (47) covering said sleeve in radially spaced relationship therewith in order to act with the sleeve for the purpose of defining a seat for receiving the end of said tubular element, said fixing means incorporating a thin-walled, compressible flange (27) forming part of the clamp (25), which is in coaxial spaced relationship with said welding sleeve (21), the latter being positioned radially towards the inside from said flange (27).

2. Assembly system according to claim 1, characterized in that said flange (27) has a plurality of flexible fingers (47) extending from the clamp in order to cover the sleeve.

3. Assembly system according to one of the preceding claims, characterized in that said clamp (25) is provided on its outside with a tab (28) forming an electrical connector and in that the resistor (22) has electric wires (41) extending through the body of the clamp towards said electric connector.

4. Assembly system according to claim 3, characterized in that said connector (28) comprises a tab extending radially towards the outside of the clamp body.

5. Assembly system according to one of the preceding claims, characterized in that it also has an annular locking or securing means (29) extending round said flange (27) and having means for applying the latter around said tubular elements in order to secure the pipe and the coupling element against said welding sleeve.

6. Assembly system according to one of the preceding claims, characterized in that it also has catches (47) for trapping said securing means in the relaxed condition on the clamp (25).

7. Assembly system according to one of the preceding claims, characterized in that the said catches (47) are constituted by a series of lugs or bosses extending towards the outside of the clamp on the rear face of the flange (27).

8. Assembly system according to one of the preceding claims, characterized in that said securing or locking means (29) are in the form of a screw clamp encircling the said fixing means (47) and having means ensuring its contraction when they are locked by clips.

9. Assembly system according to one of the preceding claims, characterized in that the flange (27) is an elastically compressible material skirt and is slotted at intervals around said clamp (25) in order to reinforce the locking of the locking ring.

10. Assembly system according to one of the preceding claims, characterized in that the locking ring (29) is a circular metal band having an internal diameter adequately fitting around the said flange (27) in the relaxed situation and in that the said means applying the flange around said tubular elements are constituted by an outward projection (44) of a small section of the circular band, limited by two generally radial, opposite walls (45), which can be pressed together to contract the installed band.

11. Assembly system according to any one of the preceding claims, characterized in that the ring-shaped body (30) has a conical opening (31) for the introduction of the pipe into the assembly to be welded and an inner shoulder (33), to which is connected one end of the welding coupling.

12. Assembly system according to any one of the preceding claims, characterized in that the tab of the electric connector (28) extends radially outwards from said ring-shaped body (30) on one side of said clamp (25), in that the connector has electric tubular contacts for connecting it to a power supply and in that the electric wires of the heating resistor are connected to the tubular contacts.

13. Assembly system according to any one of the preceding claims, characterized in that the connection between the electric connector (28) and the power supply is provided by the parallel pins (38) of a plug (39) connected to two electric wires (40).
